# EUROPEAN PATENT APPLICATION

(11) **EP 2 216 293 A1**
(43) Date of publication of application: **11.08.2010**
(21) Application number: 10150918.0
(22) Date of filing: 18.01.2010
(51) Int. Cl.: C01B 17/04, B01D 53/14

(54) **Systems and methods for treating a stream comprising an undesirable emission gas**

(30) Priority: 22.01.2009 US 357683
(71) Applicant: General Electric Company, Schenectady, NY 12345 (US)
(72) Inventor: Mazumdar, Anindra, Houston, TX 77494 (US); Mishra, Sunil Ramabhilakh, Pearland, TX 77584 (US); Naphad, Sachin Suhas, Katy, TX 77494 (US); Thacker, Pradeep Stanley, Bellaire, TX 77401 (US)
(74) Representative: Bedford, Grant Richard

(57) **Abstract**

A method for treating a stream (220) comprising an emission gas, such as hydrogen sulfide, includes passing portions of the stream comprising the emission gas to two or more reactor units (332), such as sulphur recovery units arranged in parallel while subjecting fluid flowing through at least one of the reactor units to pressure control; identifying when at least one of the reactor units trips or is taken out of service; and when at least one of the reactor units trips or is taken out of service, adjusting a flow path of said portion of the stream originally passing to the out-of-service reactor unit such that said portion passes to an absorber (402) for removing the emission gas via a compressor (354), and subjecting the fluid flowing through all of the in-service reactor units to flow rate control.

## Description

This invention relates generally to gasification systems, and more particularly, to systems and methods for treating a stream comprising hydrogen sulfide to reduce emissions.

At least some known gasification systems, such as those used in power plants, include a gasification system that is integrated with at least one power-producing turbine system, thereby forming an integrated gasification combined cycle (IGCC) power generation system. Such gasification systems may, for example, convert a mixture of fuel, air or oxygen, steam, and/or CO₂ into a synthetic gas referred to as "syngas". The syngas may then be channeled to the combustor of a gas turbine engine, which powers a generator that supplies electrical power to a power grid. Exhaust from at least some known gas turbine engines may be supplied to a heat recovery steam generator (HRSG) that generates steam for driving a steam turbine. Power generated by the steam turbine may also drive an electrical generator that provides electrical power to the power grid.

At least some known gasification systems associated with IGCC power generation systems initially produce a "raw" syngas fuel that may include carbon monoxide (CO), hydrogen (H₂), carbon dioxide (CO₂), hydrogen sulfide (H₂S), and/or carbonyl sulfide (COS). The CO₂, H₂S, and COS, collectively referred to as "acid gas", are generally removed from the raw syngas fuel to produce a "clean" syngas fuel comprising CO and H₂ for combustion within the gas turbine engines. The IGCC power generation system may include an acid gas removal subsystem with at least one main absorber for removing a majority of the H₂S.

Some IGCC power generation systems may be incapable of meeting current emissions requirements during all operating conditions. For example, high sulfur start-up fuels may produce a large quantity of emissions. Although a majority of the emissions generated may be captured during the acid gas removal process, at least some of the emissions may be released into the atmosphere during transient operating periods, such as system startups, shutdowns, and equipment trips.

Systems and methods for treating a stream comprising an undesirable emission gas are provided. In one embodiment, a method for treating a stream comprising an emission gas comprises: passing portions of the stream comprising the emission gas to two or more reactor units arranged in parallel while subjecting fluid flowing through at least one of the reactor units to pressure control; identifying when at least one of the reactor units trips or is taken out of service; and when at least one of the reactor units trips or is taken out of service, adjusting a flow path of said portion of the stream originally passing to the out-of-service reactor unit such that said portion passes to an absorber for removing the emission gas via a compressor, and subjecting the fluid flowing through all of the in-service reactor units to flow rate control.

In another embodiment, a system for treating a stream comprising hydrogen sulfide comprises: two or more reactor units arranged in parallel for receiving portions of a stream comprising an emission gas; a valve disposed upstream from each of the reactor units for allowing or blocking flow thereto; and a control system configured to control the pressure of fluid flowing through at least one of the reactor units when all of the reactor units are in service and to identify when at least one of the reactor units trips or is taken out of service, at which point the control system is configured to i) close the valve disposed upstream from the out-of-service reactor unit, ii) re-route said portion of the stream originally passing to the out-of-service reactor unit such that said portion passes to an absorber for removing the emission gas via a compressor, and ii) control the flow rate of the fluid flowing through all of the in-service reactor units.
Figure 1 is a schematic diagram of an exemplary embodiment of an integrated gasification combined-cycle (IGCC) power generation system;
Figure 2 is a schematic diagram of an exemplary embodiment of a transient process gas treatment subsystem that can be used with the IGCC power generation system shown in Figure 1;
Figure 3 is a schematic diagram of an exemplary embodiment of an acid gas removal subsystem and sulfur removal subsystem that can be used with the IGCC power generation system shown in Figure 1; and
Figure 4 is a schematic diagram of an alternative embodiment of an acid gas removal subsystem and sulfur removal subsystem that can be used with the IGCC power generation system shown in Figure 1.

As used herein, the term "lean" is used to describe a solvent that is substantially emissions free, and the term "rich" is used to describe a solvent containing emissions.

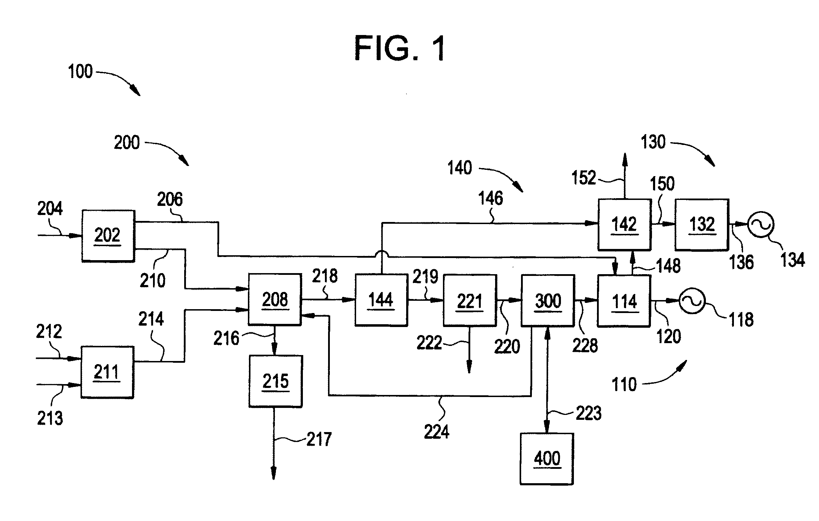

Figure 1 is a schematic diagram of an exemplary embodiment of an integrated gasification combined-cycle (IGCC) power generation system 100, such as those used in power plants. In the exemplary embodiment, IGCC system includes a gas turbine engine 110. Turbine 114 is rotatably coupled to a first electrical generator 118 via a first rotor 120. Turbine 114 is coupled in flow communication with at least one fuel source and at least one air source (both described in more detail below) and is configured to receive the fuel and air from the fuel source and the air source, respectively. Turbine 114 produces rotational energy that is transmitted to generator 118 via rotor 120, wherein generator 118 converts the rotational energy to electrical energy for transmission to at least one load, including, but not limited to, an electrical power grid (not shown).

IGCC system 100 also includes a steam turbine engine 130. In the exemplary embodiment, engine 130 includes a steam turbine 132 rotatably coupled to a second electrical generator 134 via a second rotor 136.

IGCC system 100 also includes a steam generation system 140. In the exemplary embodiment, system 140 includes at least one heat recovery steam generator (HRSG) 142 that is coupled in flow communication with at least one heat transfer apparatus 144 via at least one heated boiler feedwater conduit 146. HRSG 142 is configured to receive boiler feedwater (not shown) from apparatus 144 via conduit 146 for heating the boiler feedwater into steam. HRSG 142 also receives exhaust gases (not shown) from turbine 114 via an exhaust gas conduit (not shown) to further heat the boiler feedwater into steam. HRSG 142 is coupled in flow communication with turbine 132 via a steam conduit 150. Excess gasses and steam are exhausted from HRSG 142 to the atmosphere via stack gas conduit 152.

Steam conduit 150 channels steam from HRSG 142 to turbine 132. Turbine 132 receives the steam from HRSG 142 and converts the thermal energy in the steam to rotational energy. The rotational energy is transmitted to generator 134 via rotor 136, wherein generator 134 converts the rotational energy to electrical energy for transmission to at least one load, including, but not limited to, an electrical power grid.

IGCC system 100 also includes a gasification system 200. In the exemplary embodiment, system 200 includes at least one air separation unit 202 that is coupled in flow communication with an air source via an air conduit 204. In the exemplary embodiment, such air sources include, but are not limited to, dedicated air compressors and/or compressed air storage units (neither shown). Air separation unit 202 separates air into oxygen (O₂), nitrogen (N₂) and other components that are released via a vent (not shown). The nitrogen is channeled to gas turbine 114 to facilitate combustion.

System 200 includes a gasification reactor 208 that is coupled in flow communication with air separation unit 202 and that receives the O₂ channeled from unit 202 via a conduit 210. System 200 also includes a coal grinding and slurrying unit 211. Unit 211 is coupled in flow communication with a coal source and a water source (neither shown) via a coal supply conduit 212 and a water supply conduit 213, respectively. Unit 211 is configured to mix coal and water together to form a coal slurry stream (not shown) that is channeled to gasification reactor 208 via a coal slurry conduit 214.

Gasification reactor 208 receives the coal slurry stream and an O₂ stream via conduits 214 and 210, respectively. Gasification reactor 208 facilitates the production of a hot, raw synthetic gas (syngas) stream (not shown) that may include CO, H₂ CO₂, H₂S, and/or COS. Moreover, gasification reactor 208 also produces a hot slag stream as a by-product of the syngas production. The slag stream is channeled to a slag handling unit 215 via a hot slag conduit 216. Slag handling unit 215 quenches and breaks up the slag into smaller pieces that form a stream that may be removed and channeled through slag conduit 217.

Gasification reactor 208 is coupled in flow communication with heat transfer apparatus 144 via a hot syngas conduit 218. Heat transfer apparatus 144 receives the hot, raw syngas stream and transfers at least a portion of its heat to HRSG 142 via conduit 146. Subsequently, heat transfer apparatus 144 produces a cooled raw syngas stream that is channeled to a scrubber and low temperature gas cooling (LTGC) unit 221 via a syngas conduit 219. LTGC unit 221 removes particulate matter entrained within the raw syngas stream and facilitates the removal of the removed matter via a fly ash conduit 222. LTGC unit 221 also provides cooling of the raw syngas stream.

Gasification system 200 also includes an acid gas removal subsystem 300 that is coupled in flow communication with LTGC unit 221 that receives the cooled raw syngas stream via a raw syngas conduit 220. Acid gas removal subsystem 300 facilitates the removal of at least a portion of acid components from the raw syngas stream as described in more detail below. Such acid gas components may include, but are not limited to, CO₂, H₂S, and/or COS. Acid gas removal subsystem 300 also facilitates the separation of at least some of the acid gas components into other components such as, but not limited to, CO₂, H₂S, and/or COS. Moreover, acid gas removal subsystem 300 is coupled in flow communication with a transient gas treatment subsystem 400 or sulfur reduction subsystem 400 via a conduit 223. Subsystem 400 also receives, and separates, at least some of the acid gas components into other components such as, but not limited to, CO₂, H₂S, and/or COS. Furthermore, subsystem 400 channels a final integrated gas stream to gasification reactor 208 via acid gas removal subsystem 300 and a final integrated gas stream conduit 224. The final integrated gas stream includes predetermined concentrations of CO₂, H₂S, and/or COS that result from previous integrated gas streams as described below.

Acid gas removal subsystem 300 is coupled in flow communication with gasification reactor 208 via conduit 224. Conduit 224 channels the final integrated gas stream to predetermined portions of gasification reactor 208. The separation and removal of such CO₂, H₂S, and/or COS via acid gas removal subsystem 300 and subsystem 400 facilitates producing a clean syngas stream that is channeled to gas turbine 114 via a clean syngas conduit 228.

In operation, air separation unit 202 receives air via conduit 204. The air is separated into O₂, N₂, and other components that are vented via a vent. The N₂ is channeled to turbine 114 via conduit 206 and the O₂ is channeled to gasification reactor 208 via conduit 210. Also, in operation, coal grinding and slurrying unit 211 receives coal and water via conduits 212 and 213, respectively, wherein the resulting coal slurry stream is channeled to gasification reactor 208 via conduit 214.

Gasification reactor 208 receives O₂ via conduit 210, coal via conduit 214, and the final integrated gas stream from acid gas removal subsystem 300 via conduit 224. Reactor 208 produces a hot raw syngas stream that is channeled to apparatus 144 via conduit 218. Any slag by-product formed in reactor 208 is removed via slag handling unit 215 and conduits 216 and 217. Apparatus 144 cools the raw syngas stream to produce a cooled raw syngas stream that is channeled to scrubber and LTGC unit 221 via conduit 219. Within scrubber and LTGC 221, particulate matter is removed from the syngas via conduit 222, the syngas is cooled further, and at least a portion of COS, if present, is converted to H₂S and CO₂ via hydrolysis. The cooled raw syngas stream is channeled to acid gas removal subsystem 300 wherein acid gas components are substantially removed to form a clean syngas stream that may be channeled to gas turbine 114 via conduit 228.

Moreover, in operation, at least a portion of the acid components removed from the syngas stream is channeled to subsystem 400 via conduit 223 wherein acid components are removed and separated such that the final integrated gas stream is channeled to gasification reactor 208 via subsystem 300 and conduit 224. Further, in operation, turbine 114 receives N₂ and clean syngas via conduits 206 and 228, respectively. Turbine 114 combusts the syngas fuel, produces hot combustion gases, and channels the hot combustion gases to induce rotation of turbine 114, which subsequently rotates first generator 118 via rotor 120.

At least a portion of the heat removed from the hot syngas via heat transfer apparatus 144 is channeled to HRSG 142 via conduit 146 wherein the heat boils water to form steam. The steam is channeled to, and causes rotation of, steam turbine 132 via conduit 150. Turbine 132 rotates second generator 134 via second rotor 136.

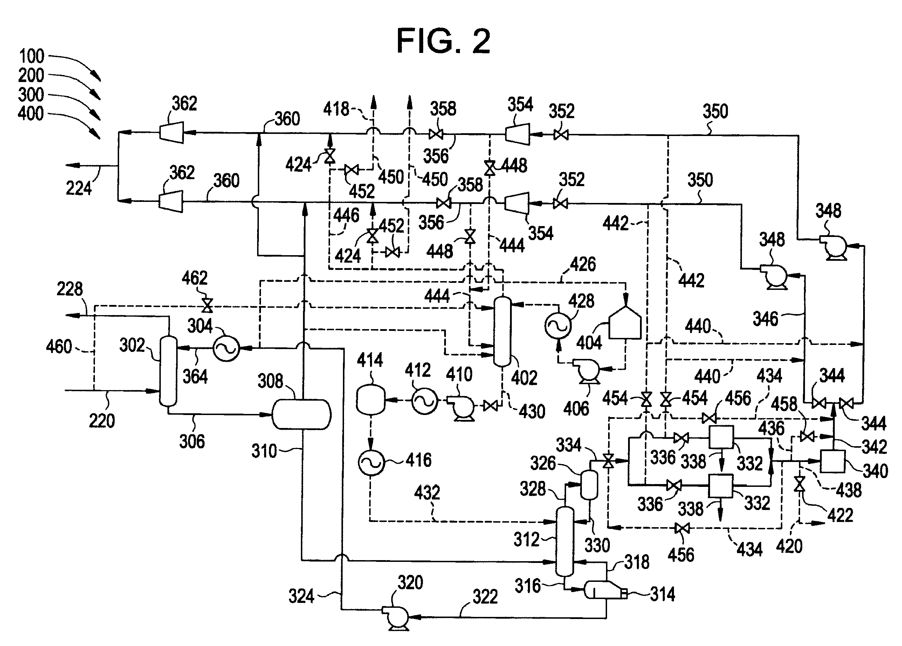

Figure 2 is a schematic diagram of an exemplary embodiment of an acid gas removal subsystem 300 and transient gas treatment subsystem 400 that may be used with an IGCC power generation system, such as plant 100 (shown in Figure 1). Acid gas removal subsystem 300 receives the raw stream via conduit 220. Also, acid gas removal subsystem 300 channels the clean syngas stream via conduit 228. In addition, acid gas removal subsystem 300 channels the integrated gas stream via conduit 224 to a gasification reactor, such as gasification reactor 208 (shown in Figure 1). Conduit 220 is coupled in flow communication to at least one high pressure absorber 302. In the exemplary embodiment, acid gas removal subsystem 300 includes two high pressure absorbers 302 coupled in flow communication with conduit 220. Alternatively, acid gas removal subsystem 300 may include any number of high pressure absorbers 302 that facilitates operation of subsystem 300 as described herein.

In the exemplary embodiment, main absorber 302 uses a solvent to facilitate acid gas removal from the raw shifted syngas stream. The raw syngas stream contacts at least a portion of an acid gas-lean solvent (not shown), which removes at least a portion of the selected acid gas components from the raw syngas stream to produce the clean syngas stream. The removed acid gas components are retained within the solvent such that a first acid-gas rich, or simply rich, solvent stream is formed. In the exemplary embodiment, such acid gas components include, but are not limited to only including, H₂S and CO₂. Alternatively, any components are removed that facilitates operation of IGCC system 100 as described herein.

In the exemplary embodiment, high pressure absorber 302 is coupled in flow communication with a flash drum 308 via first rich solvent stream conduit 306. Alternatively, high pressure absorber 302 may be coupled in flow communication with any number of flash drums 308 that facilitate the operation of acid gas removal subsystem 300 as described herein.

Flash drum 308 forms a second rich solvent stream that includes at least some remaining CO₂ and H₂S gaseous components that were not removed by the flashing mechanism described above. As such, in the exemplary embodiment, flash drum 308 is also coupled in flow communication with at least one acid gas stripper 312 via a second rich solvent conduit 310 that channels the second rich solvent stream to acid gas stripper 312. Alternatively, a plurality of flash drums 308 may be coupled in flow communication to each other in a series or parallel configuration, wherein the plurality of flash drums 308 are coupled in flow communication with acid gas stripper 312 via any number of conduits that facilitate the operation of acid gas removal subsystem 300 as described herein.

Acid gas stripper 312 receives a rich solvent stream channeled by conduit 310. Acid gas stripper 312 regenerates the received rich solvent to a lean solvent by reducing the concentration of any acid gas components within the rich solvent, thereby forming a lean solvent stream that is substantially free of CO₂ and H₂S. Acid gas stripper 312 is coupled in flow communication with a reboiler 314 via a conduit 316, wherein the lean solvent stream is channeled to reboiler 314. Reboiler 314 heats the lean solvent and is coupled in flow communication with acid gas stripper 312. A portion of the heated lean solvent is channeled to acid gas stripper 312 via a conduit 318, to facilitate a vapor boilup within acid gas stripper 312 such that stripper performance is facilitated to be improved.

Reboiler 314 is also coupled in flow communication with at least one heat transfer apparatus 304 via pump 320 and conduits 322 and 324. Pump 320 and conduits 322 and 324 channel the hot lean solvent stream through heat transfer apparatus 304. Heat transfer apparatus 304 facilitates a transfer of heat from the hot lean solvent stream to the first rich solvent stream. Heat transfer apparatus 304 is coupled in flow communication with high pressure absorber 302 via conduit 364. Conduit 364 channels a warm lean solvent stream from heat transfer apparatus 304 and facilitates a removal of at least some of the heat within the warm solvent stream to form a cooler, lean solvent stream.

Acid gas stripper 312 produces a first CO₂/H₂S acid gas stream as a function of regenerating the solvent as described above. Acid gas stripper 312 is coupled in flow communication with a phase separator 326 via a conduit 328. The first CO₂/H₂S acid gas stream may contain solvent. Phase separator 326 facilitates removing solvent from the first CO₂/H₂S acid gas stream and then channels the solvent back to acid gas stripper 312 via conduit 330. More specifically, phase separator 326 forms a second CO₂/H₂S acid gas stream.

Acid gas removal subsystem 300 also includes a plurality of chemical transition units, or sulfur removal units (SRU) 332, that are coupled in flow communication with phase separator 326 via at least one conduit 334 and at least one inlet block valve 336 for each SRU 332. Each SRU 332 receives the second CO₂/H₂S acid gas stream, and forms sulfur dioxide (SO₂) and elemental sulfur (S). Specifically, a portion of the H₂S within the second CO₂/H₂S acid gas stream reacts with O₂ to form SO₂. The SO₂ also reacts with the remaining H₂S to form elemental S and H₂O. Unconverted CO₂, SO₂, and N₂ within SRU 332 form an SRU tail gas stream. Any sulfur (S) formed is removed from each SRU 332 via a conduit 338.

In the exemplary embodiment, SRUs 332 are coupled in flow communication with at least one chemical transition unit, or tail gas unit (TGU) 340, that receives the SRU tail gas stream. TGU 340 also forms H₂S by hydrogenating the unconverted SO₂ with hydrogen (H₂). Carbon dioxide within the second CO₂/H₂S acid gas stream and the SRU tail gas stream are substantially chemically unchanged. Therefore, TGU 340 forms a second integrated gas stream. In this stream, the ratio of CO₂-to-H₂S is substantially greater than the CO₂-to-H₂S ratio in the second CO₂/H₂S acid gas stream.

Acid gas removal subsystem 300 also includes at least one blower 348 that is coupled in flow communication with TGU 340 via conduit 342, at least one blocking valve 344, and at least one conduit 346. Moreover, in the exemplary embodiment, acid gas removal subsystem 300 includes at least one low pressure (LP) compressor 354 coupled in flow communication with blower 348 via at least one conduit 350 and at least one blocking valve 352. Furthermore, acid gas removal subsystem 300 includes at least one high pressure (HP) compressor 362 that is coupled in flow communication with LP compressor 354 via conduits 356 and 360 and valve 358. HP compressor 362 is also coupled in flow communication with conduit 224.

In the exemplary embodiment, valves 336, 344, 352, and 358 are remotely and automatically operated and are coupled in data communication with a control system (not shown). Alternatively, valves 336, 344, 352, and 358 may be operated in any manner that facilitates operation of acid gas removal subsystem 300 as described herein.

During transient operation, at least a portion of the acid components removed from the syngas stream is channeled to transient gas treatment subsystem 400 via conduit 223. Within transient gas treatment subsystem 400, acid components are removed and separated such that the final integrated gas stream may be channeled to reactor 208 via acid gas removal subsystem 300 and conduit 224.

In the exemplary embodiment, transient gas treatment subsystem 400 is coupled in flow communication with acid gas removal subsystem 300. Transient gas treatment subsystem 400 includes at least one low pressure (LP) absorber 402. LP absorber 402 is similar to HP absorber 302, in that both absorbers 302 and 402 use a solvent to separate and remove predetermined components from a fluid stream. However, LP absorber 402 is different than HP absorber 302, in that LP absorber 402 operates at a lower pressure than HP absorber 302 and selectively separates CO₂ from H₂S retained in gases that are produced during transient operating periods such as startup, shutdown, or equipment trip periods.

Transient gas treatment subsystem 400 also includes a hot lean solvent conduit 426 that is coupled in flow communication to conduit 324. Conduit 426 channels hot lean solvent from reboiler 314 and pump 320 to a lean solvent storage tank 404. Lean solvent storage tank 404 is also coupled in flow communication to LP absorber 402 via a first pump 406 and a heat transfer apparatus 428.

In the exemplary embodiment, LP absorber 402 is also coupled in flow communication with a rich solvent storage tank 414 via a second pump 410, a heat transfer apparatus 412, and a conduit 430. Pump 410, heat transfer apparatus 412, and conduit 430 facilitate channeling rich solvent to rich solvent storage tank 414. Rich solvent storage tank 414 is coupled in flow communication with acid gas stripper 312 via a third heat transfer apparatus 416 and conduit 432.

LP absorber 402 is also coupled in flow communication with conduit 356 via at least one HP compressor bypass conduit 444 and at least one HP compressor bypass valve 448. In addition, LP absorber 402 is coupled in flow communication with at least one discharge-to-flare conduit 450 and at least one discharge-to-flare valve 452. Moreover, LP absorber 402 is coupled in flow communication with HP compressor 362 via at least one conduit 446 and at least one valve 424.

Transient gas treatment subsystem 400 also includes at least one SRU bypass conduit 440 and at least one SRU bypass valve 454 that couples phase separator 326 in flow communication with blowers 348. In addition, SRUs 332 are coupled in flow communication with at least one conduit 434 and at least one valve 456 that facilitates recycling untreated SRU tail gas for treatment in SRUs 332. SRUs 332 are also coupled in flow communication with a thermal oxidizer 421 via conduit 438 and valve 422. Moreover, SRUs 332 are coupled in flow communication with blowers 348 via a TGU bypass conduit 436 and TGU bypass valve 458. TGU bypass conduit and valve 436 and 458 channel SRU tail gas to blowers 348 during a TGU trip. Further, transient gas treatment subsystem 400 includes at least one blower bypass conduit 442 that enables SRUs 332 and/or TGU 340 to bypass blowers 348 and to channel untreated SRU tail gas and/or untreated TGU tail gas to low pressure compressors 354.

In the exemplary embodiment, valves 422, 424, 448, 452, 454, 456, and 458 are remotely and automatically controlled valves that are coupled in data communication with a control system (not shown). Alternatively, valves 422, 424, 448, 452, 454, 456, and 458 may be operated in any manner that facilitates operation of transient gas treatment subsystem 400 as described herein.

During non-transient operation, acid gas removal subsystem 300 acts to remove at least a portion of acid components from the raw syngas stream. Such acid gas components include, but are not limited to, H₂S and CO₂. Subsystem 300 is further configured to facilitate separation of at least some of the acid gas components into components that include, but are not limited to, H₂S and CO₂. However, the above-described apparatus may be subject to equipment failures and shutdown operations. During plant startup, plant shutdown, or an equipment failure, also called a trip, acid gas removal system 300 may release higher emissions into the atmosphere. Transient gas treatment subsystem 400 ensures that all process streams released to the atmosphere via flare 418 or thermal oxidizer 421 can be substantially free of sulfur.

In the exemplary embodiment, during a trip of one or more SRUs 332, the acid gases from acid gas stripper 312 bypass SRUs 332 via SRU bypass conduit 440 and SRU bypass valve 454 and are channeled to blowers 348. In an alternate embodiment, the acid gases from acid gas stripper 312 bypasses SRUs 332 via blower bypass conduit 442 and SRU bypass valve 454 and are channeled to low pressure compressors 354.

In the exemplary embodiment, untreated gases are channeled from blowers 348 to LP compressors 354 via conduit 350 and valve 352. In an alternative embodiment, untreated gases bypass blowers 348 and are channeled to LP compressors 354 via blower bypass conduit 442 and SRU bypass valve 454. HP bypass valves 448 are then closed and the pressurized, untreated tail gases and acid gases are channeled to LP absorber 402 via HP bypass conduit 444. LP absorber 402, as described above, is configured to separate and remove predetermined components from the fluid stream. The stream channeled to LP absorber 402 via HP bypass conduit 444 is treated with a lean solvent channeled to LP absorber 402 from lean solvent storage tank 404 via first pump 406 and first heat transfer apparatus 428. Within LP absorber 402, at least a portion of the sulfur from the sulfur dioxide and hydrogen sulfide components is removed from the untreated gases, such that a rich solvent is produced. In the exemplary embodiment, the amount of sulfur in the gases is reduced to approximately a part-per-million (PPM) level. In alternative embodiments, the amount of sulfur removed may vary. The rich solvent is channeled to rich solvent storage tank 414 via conduit 430, second pump 410, and second heat transfer apparatus 412. In one embodiment, the rich solvent is then channeled, via third heat transfer apparatus 416 and conduit 432, to acid gas stripper 312 for regeneration. In an alternative embodiment, the rich solvent is channeled to acid gas stripper 312 using only conduit 432. Moreover, in another alternative embodiment, the overhead gases from LP absorber 402, consisting mostly of carbon dioxide, are recycled to the gasifier using HP compressors 362. Specifically, the overhead gases are channeled to HP compressors 362 via at least one conduit 446 and at least one valve 424. In a further alternative embodiment, the overhead gases from low pressure absorber 402 are vented to flare 418 via at least one conduit 450 and at least one valve 452.

In the exemplary embodiment, during a trip of TGU 340, the untreated SRU tail gas bypasses the tripped TGU 340 via TGU bypass conduit 436 and TGU bypass valve 458. In one embodiment, the untreated SRU tail gas is channeled to blowers 348 via at least one valve 344 and at least one conduit 346, and a portion of the acid gases from acid gas stripper 312 bypass SRUs 332 via SRU bypass conduit 440 and SRU bypass valve 454 and are channeled to blowers 348. Further, at least a portion of the acid gases from acid gas stripper 312 bypasses SRUs 332 via blower bypass conduit 442 and SRU bypass valve 454 and are channeled to low pressure compressors 354. In the exemplary embodiment, approximately 50% of the acid gas bypasses SRUs 332. In alternative embodiments, the proportion of the acid gas that bypasses SRUs 332 may vary. The remaining acid gases are channeled to SRUs 332 via at least one conduit 434 and at least one valve 456 to facilitate conversion to elemental sulfur.

In the exemplary embodiment, untreated gases are channeled from blowers 348 to LP compressors 354 via conduit 350 and valve 352. In an alternative embodiment, untreated gases are channeled directly to LP compressors 354 via blower bypass conduit 452 and SRU bypass valves 454. HP bypass valves 448 are then closed and the pressurized, untreated tail gases and acid gases are channeled to LP absorber 402 via HP bypass conduit 444. LP absorber 402, as described above, is configured to separate and remove predetermined components from the fluid stream. The stream channeled to LP absorber 402 via HP bypass conduit 444 is treated with a lean solvent channeled to LP absorber 402 from lean solvent storage tank 404 via first pump 406 and first heat transfer apparatus 428. Within LP absorber 402, at least a portion of the sulfur from the sulfur dioxide and hydrogen sulfide components is removed from the untreated gases, such that a rich solvent is produced. In the exemplary embodiment, the amount of sulfur in the gases is reduced to approximately a part-per-million (PPM) level. In alternative embodiments, the amount of sulfur removed may vary. The rich solvent is channeled to rich solvent storage tank 414 via conduit 430, second pump 410, and second heat transfer apparatus 412. In one embodiment, the rich solvent is then channeled, via third heat transfer apparatus 416 and conduit 432, to acid gas stripper 312 for regeneration. In an alternative embodiment, the rich solvent is channeled to acid gas stripper 312 using only conduit 432. Moreover, in another alternative embodiment, the overhead gases from LP absorber 402, consisting mostly of carbon dioxide, are recycled to the gasifier using HP compressors 362. Specifically, the overhead gases are channeled to HP compressors 362 via at least one conduit 446 and at least one valve 424. In a further alternative embodiment, the overhead gases from low pressure absorber 402 are vented to flare 418 via at least one conduit 450 and at least one valve 452. The untreated SRU tail gases are partially recycled back to SRUs 332 via conduits 434 and valves 456, and the remaining gases are vented to thermal oxidizer 421 via conduit 438 and valve 422.

In the exemplary embodiment, during a trip of one or more blowers 348, valve 344 associated with the tripped blower 348 is closed to facilitate channeling a portion of the acid gas from SRUs 332 to the remaining un-tripped blowers 348. In the exemplary embodiment, approximately 50% of the acid gases bypass the tripped blower 348. In alternative embodiments, the proportion of the acid gases that bypass the tripped blower 348 may vary. The remaining acid gases are channeled to SRUs 332 via at least one conduit 434 and at least one valve 456 to facilitate conversion to elemental sulfur. In an alternative embodiment, valves 344 are closed and a portion of the acid gas from SRUs 332 is channeled to low pressure compressors 354 via blower bypass conduit 442.

In the exemplary embodiment, untreated gases are channeled from un-tripped blowers 348 to LP compressors 354 via conduit 350 and valve 352. In an alternative embodiment, untreated gases bypass blowers 348 and are channeled to low pressure compressors 354 via blower bypass conduit 442 and bypass valve 454. HP bypass valves 448 are then closed and the pressurized untreated tail gases and acid gases are channeled to LP absorber 402 via HP bypass conduit 444. LP absorber 402, as described above, separates and removes predetermined components from the fluid stream. The stream channeled to LP absorber 402 via HP bypass conduit 444 is treated with a lean solvent channeled to LP absorber 402 from lean solvent storage tank 404 via first pump 406 and first heat transfer apparatus 428. Within LP absorber 402, at least a portion of the sulfur from the sulfur dioxide and hydrogen sulfide is removed from the untreated gases, producing a rich solvent. In the exemplary embodiment, the amount of sulfur in the gases is reduced to approximately a part-per-million (PPM) level. In alternative embodiments, the amount of sulfur removed may vary. The rich solvent is channeled to rich solvent storage tank 414 via conduit 430, second pump 410, and second heat transfer apparatus 412. In the exemplary embodiment, the rich solvent is then channeled, via third heat transfer apparatus 416 and conduit 432, to acid gas stripper 312 for regeneration. In an alternative embodiment, the rich solvent is channeled to acid gas stripper 312 using only conduit 432. Moreover, in the exemplary embodiment, the overhead gases from LP absorber 402, consisting mostly of carbon dioxide, are recycled to the gasifier using HP compressors 362. Specifically, the overhead gases are channeled to HP compressors 362 via at least one conduit 446 and at least one valve 424. In an alternative embodiment, the overhead gases from low pressure absorber 402 are vented to flare 418 via at least one conduit 450 and at least one valve 452. The untreated SRU tail gases are partially recycled back to SRUs 332 via conduits 434 and valves 456, and the remaining tail gases are vented to thermal oxidizer 421 via conduit 438 and valve 422.

In the exemplary embodiment, during a trip of one or more LP compressors 354, the valve 352 associated with the tripped LP compressor 354 is closed to facilitate channeling a portion of the acid gas from blowers 348 to the remaining un-tripped LP compressors 354. In the exemplary embodiment, approximately 50% of the acid gases bypass the tripped LP compressor 354. In alternative embodiments, the proportion of the acid gases that bypass the tripped LP compressor 354 may vary. The remaining acid gases are channeled to SRUs 332 via at least one conduit 434 and at least one valve 456 to facilitate conversion to elemental sulfur. In an alternative embodiment, valves 344 close and a portion of the acid gas from SRUs 332 is channeled to low pressure compressors 354 via blower bypass valve 460 and blower bypass conduit 442.

HP bypass valves 448 are then closed, and the pressurized untreated tail gases and acid gases are channeled to LP absorber 402 via HP bypass conduit 444. LP absorber 402, as described above, separates and removes predetermined components from the fluid stream. The stream channeled to LP absorber 402 via HP bypass conduit 444 is treated with a lean solvent channeled to LP absorber 402 from lean solvent storage tank 404 via first pump 406 and first heat transfer apparatus 428. Within LP absorber 402, the raw syngas stream contacts at least a portion of an acid gas-lean solvent which removes at least a portion of the selected acid gas components from the raw syngas stream to produce the clean syngas stream and a rich solvent. In the exemplary embodiment, the amount of sulfur in the gases is reduced to approximately a part-per-million (PPM) level. In alternative embodiments, the amount of sulfur removed may vary. The rich solvent is channeled to rich solvent storage tank 414 via conduit 430, second pump 410, and second heat transfer apparatus 412. In the exemplary embodiment, the rich solvent is then channeled, via third heat transfer apparatus 416 and conduit 432, to acid gas stripper 312 for regeneration. In an alternative embodiment, the rich solvent is channeled to acid gas stripper 312 using only conduit 432. In the exemplary embodiment, the overhead gases from LP absorber 402, consisting mostly of carbon dioxide, are recycled to the gasifier using HP compressors 362. Specifically, the overhead gases are channeled to HP compressors 362 via at least one conduit 446 and at least one valve 424. In an alternative embodiment, the overhead gases from low pressure absorber 402 are vented to flare 418 via at least one conduit 450 and at least one valve 452. The untreated SRU tail gases are partially recycled back to SRUs 332 via conduits 434 and valves 456, and the remaining tail gases are vented to thermal oxidizer 421 via conduit 438 and valve 422.

In the exemplary embodiment, during a trip of one or more HP compressors 362, tail gases are channeled from blowers 348 to LP compressors 354 via conduit 350 and valve 352. Moreover, in the exemplary embodiment, at least a portion of the gas from flash drum 308 is channeled to LP compressors 354. HP bypass valves 448 are then closed, and the pressurized and untreated tail gases and acid gases are channeled to LP absorber 402 via HP bypass conduit 444. LP absorber 402, as described above, is configured to separate and remove predetermined components from the fluid stream. The stream channeled to LP absorber 402 via HP bypass conduit 444 is treated with a lean solvent channeled to LP absorber 402 from lean solvent storage tank 404 via first pump 406 and first heat transfer apparatus 428. Within LP absorber 402, at least a portion of the sulfur from the sulfur dioxide, hydrogen sulfide, and carbonyl sulfide components is removed from the untreated gases, such that a rich solvent is produced. In the exemplary embodiment, the amount of sulfur in the gases is reduced to approximately a part-per-million (PPM) level. In alternative embodiments, the amount of sulfur removed may vary. The rich solvent is channeled to rich solvent storage tank 414 via conduit 430, second pump 410, and second heat transfer apparatus 412. In the exemplary embodiment, the rich solvent is then channeled, via third heat transfer apparatus 416 and conduit 432, to acid gas stripper 312 for regeneration. In an alternative embodiment, the rich solvent is channeled to acid gas stripper 312 using only conduit 432. The overhead gases from LP absorber 402, consisting mostly of carbon dioxide, are vented to flare 418 via at least one conduit 450 and at least one valve 452.

In the exemplary embodiment, during a full system shutdown, main absorber 302 may be limited in the amount of raw syngas that can be treated. Accordingly, during a shutdown sequence, raw syngas, which is channeled into main absorber 302 via conduit 220, bypasses main absorber 302 via absorber bypass conduit 460 and absorber bypass valve 462. LP absorber 402, as described above, is configured to separate and remove predetermined components from the fluid stream. The stream channeled to LP absorber 402 via main absorber bypass conduit 460 is treated with a lean solvent channeled to LP absorber 402 from lean solvent storage tank 404 via first pump 406 and first heat transfer apparatus 428. Within LP absorber 402, at least a portion of the sulfur from the sulfur dioxide, hydrogen sulfide, and carbonyl sulfide components is removed from the untreated gases, such that a rich solvent is produced. In the exemplary embodiment, the amount of sulfur in the gases is reduced to approximately a part-per-million (PPM) level. In alternative embodiments, the amount of sulfur removed may vary. The rich solvent is channeled to rich solvent storage tank 414 via conduit 430, second pump 410, and second heat transfer apparatus 412. In the exemplary embodiment, the rich solvent is then channeled, via third heat transfer apparatus 416 and conduit 432, to acid gas stripper 312 for regeneration. In an alternative embodiment, the rich solvent is channeled to acid gas stripper 312 using only conduit 432. Moreover, in the exemplary embodiment, the overhead gases from LP absorber 402, consisting mostly of carbon dioxide, are recycled to the gasifier using HP compressors 362. Specifically, the overhead gases are channeled to HP compressors 362 via at least one conduit 446 and at least one valve 424. In an alternative embodiment, the overhead gases from low pressure absorber 402 are vented to flare 418 via at least one conduit 450 and at least one valve 452.

Transient gas treatment subsystem 400 facilitates mitigating a concentration of sulfur-containing species such as, but not limited to, H₂S in the raw and clean syngas streams by substantially mitigating the concentration of H₂S in the gas stream channeled to gasification reactor 208. LP absorber 402 is in service during transient periods, whereby LP absorber 402 substantially removes H₂S as described above. Such mitigation in the H2S concentration facilitates lower emissions during transient periods thereby increasing flexibility of operation of IGCC system 100.

The above-described methods and apparatus permit transient process gas treatment of an integrated gasification combined-cycle (IGCC) system, such as those used in power plants, with minimal sulfur emissions. Specifically, emissions produced during a transient process are routed through a low pressure absorber where the emissions are mixed with a lean solvent to facilitate reducing the number of emissions produced. The resulting rich solvent is routed to an acid gas stripper to further remove emissions and the overhead gas from the low pressure absorber is recycled into the gasifier.

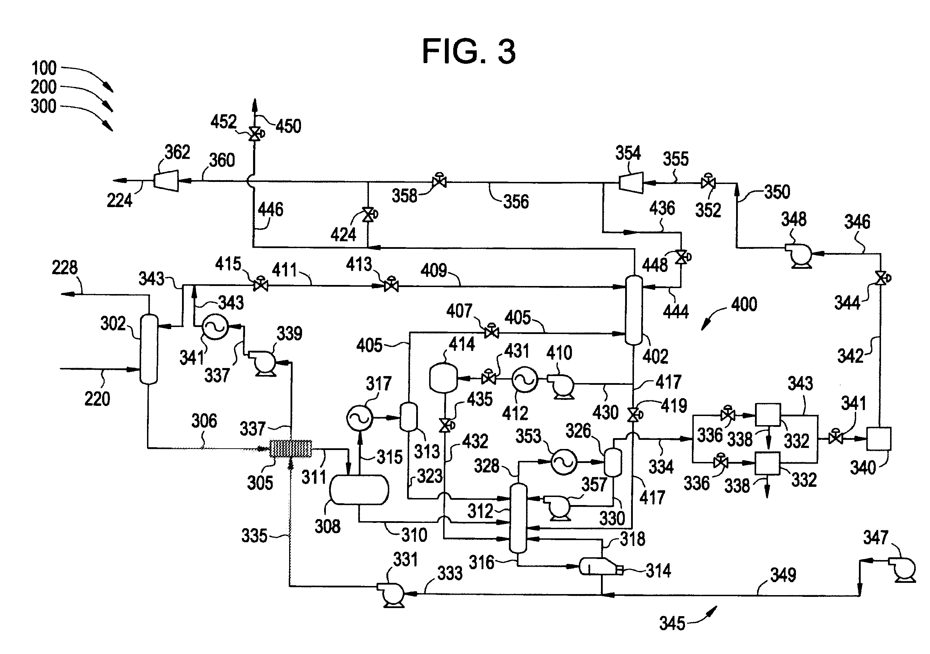

Figure 3 is a schematic diagram of an exemplary embodiment of an acid gas removal subsystem 300 and sulfur removal subsystem 400 that can be used with IGCC power generation plant 100 (shown in Figure 1). Subsystem 300 receives the raw stream (not shown) via conduit 220. Also, subsystem 300 channels the clean syngas stream (not shown) via conduit 228. Moreover, subsystem 300 channels the integrated gas stream (not shown) via conduit 224 to gasification reactor 208 (shown in Figure 1). Conduit 220 is coupled in flow communication to at least one main absorber 302. In the exemplary embodiment, subsystem 300 includes one main absorber 302 coupled in flow communication with conduit 220. Alternatively, subsystem 300 includes any number of main absorbers 302 that facilitates operation of subsystem 300 as described herein.

In the exemplary embodiment, main absorber 302 uses a solvent (not shown) that includes, but is not limited to, dimethyl ethers of polyethylene glycol (DEPG) to facilitate acid gas removal from the raw shifted syngas stream. Alternatively, main absorber 302 uses an amine-based and/or methanol-based solvent, or any solvent that facilitates acid gas removal as described herein. The raw syngas stream contacts at least a portion of an acid gas-lean solvent (not shown), which removes at least a portion of the selected acid gas components from the raw syngas stream to produce the clean syngas stream. The removed acid gas components are retained within the solvent thereby forming a first acid-gas rich, or simply rich, solvent stream (not shown). In the exemplary embodiment, such acid gas components include, but are not limited to, CO₂, COS, and H₂S. Alternatively, any components are removed that facilitates operation of IGCC plant 100 as described herein.

In the exemplary embodiment, main absorber 302 is coupled in flow communication with one flash drum 308 via heat transfer apparatus 305 and first rich solvent stream conduits 306 and 311. Alternatively, main absorber 302 is coupled in flow communication with any number of flash drums 308 that facilitate operation of subsystem 300 as described herein. Apparatus 305 is configured to remove heat from at least a portion of the acid-gas rich solvent stream, and conduit 306 is configured to channel the first acid-gas rich solvent stream from absorber 302 to apparatus 305. Heat transfer apparatus 305 is coupled in flow communication with flash drum 308 (sometimes referred to as a flash tank) via conduit 311.

Flash drum 308 is configured to facilitate phase separation via flashing at least a portion of the CO₂, COS, and H₂S gaseous components within the first rich solvent stream to form a flash gas stream (not shown). The flash gas stream includes predetermined concentrations of gaseous CO₂, COS, and H₂S components. Specifically, the flash gas stream includes a first concentration of gaseous CO₂, a first concentration of gaseous COS, and a first concentration of gaseous H₂S. Flash drum 308 is coupled in flow communication with a first phase separator 313 via conduits 315 and a heat transfer apparatus 317. Conduits 315 are configured to channel the flash gas stream from flash drum 308 to separator 313. Apparatus 317 is configured to remove heat from at least a portion of the flash gas stream. A first integrated gas stream (not shown) is produced within phase separator 313 as discussed further below.

Flash drum 308 is also configured to form a second rich solvent stream (not shown) that includes at least some remaining CO₂, COS and H₂S gaseous components not removed by the flashing mechanism as described above. Therefore, in the exemplary embodiment, the one flash drum 308 is also coupled in flow communication with at least one acid gas stripper 312 via a second rich solvent conduit 310 that is configured to channel the second rich solvent stream to acid gas stripper 312. Alternatively, a plurality of flash drums 308 are coupled in flow communication to each other in a series or parallel configuration, wherein the plurality of flash drums 308 are coupled in flow communication with acid gas stripper 312 via any number of conduits that facilitate operation of subsystem 300 as described herein.

Stripper 312 is also coupled in flow communication with first phase separator 313 via a partial solvent and water conduit 323. Separator 313 is configured to receive the flash gas stream from conduits 315 and heat transfer apparatus 317 that includes at least some rich solvent and water in addition to the first concentration of gaseous CO₂, the first concentration of COS and the first concentration of gaseous H₂S. Separator 313 is also configured to separate at least a portion of the water from the flash gas stream, thereby forming the first integrated gas stream and a partial solvent and water stream (not shown). The first integrated gas stream has a second concentration of gaseous CO₂. Also, the first integrated gas stream has a second concentration of gaseous COS. Moreover, the first integrated gas stream has a second concentration of gaseous H₂S. Conduit 323 is configured to channel the partial solvent and water stream to acid gas stripper 312.

Stripper 312 is configured to receive a plurality of rich solvent and partial solvent and water streams, including those streams channeled by conduits 310 and 323. Stripper 312 is further configured to regenerate the received rich solvent to a lean solvent by facilitating the removal of substantially all of any acid gas components within the rich solvent, thereby forming a lean solvent stream (not shown) that is substantially free of CO₂, COS and H₂S. In the exemplary embodiment, stripper 312 includes a refrigerant system (not shown) that facilitates regeneration, wherein such refrigerant system includes at least one electric motor-driven refrigerant compressor. Alternatively, stripper 312 includes any system or apparatus that facilitates operation of system 300 as described herein.

Stripper 312 is coupled in flow communication with a reboiler 314 via a conduit 316 wherein the lean solvent stream is channeled to reboiler 314. Reboiler 314 is configured to heat the lean solvent. Moreover, reboiler 314 is further coupled in flow communication with stripper 312 wherein a portion of the heated lean solvent is channeled to stripper 312 via a conduit 318, thereby facilitating a vapor boilup within stripper 318 such that stripper performance is facilitated.

Reboiler 314 is also coupled in flow communication with apparatus 305 via at least one pump 331 and conduits 333 and 335 wherein pump 331 and conduits 333 and 335 are configured to channel the hot lean solvent stream through apparatus 305. Apparatus 305 is configured to facilitate a transfer of heat from the hot lean solvent stream to the first rich solvent stream. Apparatus 305 is coupled in flow communication with main absorber 302 via a plurality of conduits 337, at least one pump 339 and a heat transfer apparatus 341. Conduits 337, pump 339, and apparatus 341 are configured to channel a warm lean solvent stream (not shown) from apparatus 305 and facilitate a removal of at least some of the heat within the warm solvent stream to form a cool lean solvent stream. A conduit 343 is configured to channel that stream from apparatus 341 to main absorber 302.

Pump 331 is also coupled in flow communication with a lean solvent makeup subsystem 345. Subsystem 345 includes a lean solvent source (not shown), at least one pump 347 coupled to the source, and a conduit 349 that is configured to channel a lean solvent stream to conduit 333 for use within subsystem 300. Alternatively, conduit 349 is coupled in flow communication with conduit 337 downstream of heat transfer apparatus 305, thereby facilitating optimization of heat transfer into the lean solvent stream channeled from reboiler 314.

Stripper 312 is also configured to produce a first CO₂/COS/H₂S acid gas stream as a function of regenerating the solvent as described above. The first CO₂/COS/H₂S acid gas stream includes a third CO₂ concentration, a third COS concentration, a third H₂S concentration, and a first concentration of water, wherein the third CO₂, COS and H₂S concentrations are not referenced to the first and second CO₂, COS and H₂S concentrations described above, respectively. Stripper 312 is coupled in flow communication with a second phase separator 326 via at least one heat transfer apparatus 353 and a plurality of conduits 328. Apparatus 353 is configured to remove heat from the hot first CO₂/COS/H₂S acid gas stream and condense and remove water from the stream. The first CO₂/COS/H₂S acid gas stream may contain solvent, therefore, separator 326 facilitates removing such solvent and channeling the solvent back to stripper 312 via at least one pump 357 and conduit 330. Therefore, separator 326 forms a second CO₂/COS/H₂S acid gas stream (not shown). The second CO₂/COS/H₂S acid gas stream includes a fourth CO₂ concentration, a fourth H₂S concentration, and a second concentration of water. The second water concentration in the second CO₂/COS/H₂S acid gas stream is less than the first water concentration in the first CO₂/COSiH₂S acid gas stream.

Subsystem 300 also includes a plurality of chemical transition units, or sulfur removal units (SRU) 332, coupled in flow communication with separator 326 via at least one conduit 334 and at least one inlet block valve 336 for each SRU 332. Each SRU 332 is configured to receive the second CO₂/COS/H₂S acid gas stream and form sulfur dioxide (SO₂) and elemental sulfur (S). Specifically, a portion of H₂S within the second CO₂/COS/H₂S acid gas stream reacts with O₂ to form SO₂. SO₂ further reacts with a portion of the remaining H₂S to form elemental S and H₂O. A portion of COS within the second CO₂/COS/H₂S acid gas stream reacts with H₂O to form H2S and CO₂ some of which may be further converted as described above. Unconverted CO₂, SO₂, COS, H₂S, and N₂ within SRUs 332 form and constitute a SRU tail gas stream (not shown), wherein the SRU tail gas stream has a fifth CO₂ concentration, a fifth COS concentration, and a fifth H₂S concentration. The elemental S formed is removed from each SRU 360 via a conduit 338.

SRUs 332 are coupled in flow communication with at least one chemical transition unit, or tail gas unit 340, that is configured to receive the SRU tail gas stream via and conduits 343. TGU 340 is also configured to form H₂S via hydrogenating the unconverted SO₂ with H₂. The CO₂ portions of the second CO₂/COS/H₂S acid gas stream and the SRU tail gas stream are substantially chemically unchanged. That is, the fourth and fifth CO₂ concentrations, respectively, are substantially similar. Therefore, TGU 340 is configured to form a second integrated gas stream (not shown) with a sixth CO₂ concentration, sixth COS concentration, and a sixth H₂S concentration, wherein the ratio of CO₂-to-H₂S is substantially greater than the CO₂-to-H₂S ratio in the second CO₂/COS/H₂S acid gas stream.

Acid gas removal subsystem 300 further includes at least one blower 348 coupled in flow communication with TGU 340 via conduits 342 and 346 and blocking valve 344. Moreover, subsystem 300 includes at least one LP compressor 354 coupled in flow communication with blower 348 via conduits 350 and blocking valve 352. Furthermore, subsystem 300 includes at least one HP compressor 362 coupled in flow communication with LP compressor 354 via conduits 356 and 360 and valve 358. HP compressor 362 is coupled in flow communication with conduit 224.

In the exemplary embodiment, valves 336, 341, 344, 352, and 358 are remotely- and automatically-operated valves that are coupled in data communication with a control system (not shown). Alternatively, valves 336, 341, 344, 352, and 358 are any valves operated in any manner that facilitates operation of subsystem 300 as described herein.

In operation, subsystem 300 receives raw syngas via conduit 220. The raw syngas stream is channeled to main absorber 302 wherein the raw syngas stream contacts at least a portion of the acid gas-lean solvent which removes at least a portion of the selected acid gas components from the raw syngas stream to produce the clean syngas stream. The removed acid gas components are retained within the solvent, thereby forming the first acid-gas rich solvent stream. In the exemplary embodiment, such acid gas components include, but are not limited to, CO₂, COS, and H₂S.

The rich solvent is channeled from main absorber 302 via conduit 306, and lean solvent is channeled into main absorber 302 via conduit 343. The first rich solvent stream is heated in heat transfer apparatus 305 and channeled to flash drum 308 via conduit 311. The first rich solvent stream is flashed in drum 308 via a predetermined pressure drop such that a substantial portion of the entrained CO₂, COS, and H₂S are removed from the rich solvent. Subsequently, a flash gas stream with at least a portion of the rich solvent entrained is formed. Specifically, the flash gas stream includes the first concentration of gaseous CO₂, the first concentration of COS, and the first concentration of H₂S. Moreover, the second rich solvent stream with a portion of the CO₂, COS, and H₂S is formed. The CO₂/COS/H₂S acid gas concentration in the second rich solvent stream is less than the CO₂/COS/H₂S acid gas concentration in the first rich solvent stream.

The second rich solvent stream is channeled to stripper 312 via conduit 310, and the flash gas stream is channeled to first phase separator 313 via conduits 315 and heat transfer apparatus 317. Apparatus 317 facilitates cooling the flash gas stream such that liquid removal by separator 313 is facilitated. The liquids, partially including solvent and water, are removed to form the partial solvent and water stream that is channeled to stripper 312 via conduit 323. The CO₂/COS/H₂5 acid gas concentration in the partial solvent and water stream is less than the CO₂/COS/H₂S acid gas concentration in the second rich solvent stream. Moreover, the first integrated gas stream is formed by separator 312 as is discussed further below wherein the CO₂/COS/H₂S acid gas-to-solvent ratio in the first integrated gas stream is greater than the CO2/COS/H2S acid gas-to-solvent ratio in the flash gas stream.

Acid gas stripper 312 receives the second rich solvent stream and the partial solvent and water stream via conduits 310 and 323, respectively, wherein a substantial portion of CO₂, COS and H₂S entrained within these two streams is stripped from the solvent. The rich solvent is therefore regenerated to a lean solvent and a substantial portion of the remaining entrained CO₂, COS and H₂S stripped from the solvent to form the first CO₂/COS/H₂S acid gas stream. The first CO₂/COS/H₂S acid gas stream includes the third CO₂ concentration, the third COS concentration, the third H2S concentration, and the first concentration of water, wherein the third CO₂, COS, and H₂S concentrations are not referenced to the first and second CO₂, COS and H₂S concentrations described above, respectively.

The regenerated, lean solvent is channeled to reboiler 314 from stripper 312 via conduit 316 wherein the lean solvent is heated. A portion of the hot lean solvent is recirculated back to stripper 312 via conduit 318 to facilitate vapor boilup within stripper 312, which subsequently facilitates a gas-from liquid stripping operation of stripper 312. The remainder of the lean solvent is channeled to heat transfer apparatus 305 as a hot lean solvent stream via pump 331 and conduits 333 and 335. Moreover, makeup lean solvent is channeled to the hot lean solvent stream via subsystem 345 and conduit 349. The hot lean solvent transfers heat to the first rich solvent stream via apparatus 305 wherein the first rich solvent stream is heated and the hot lean solvent stream is cooled to form a warm lean solvent stream. The warm lean solvent stream is channeled to heat transfer apparatus 341 via pump 339 and conduit 337 wherein the warm lean solvent stream is cooled to form a cool lean solvent stream that is channeled to main absorber 302 via conduit 343 to replace the rich solvent channeled out of absorber 302 as discussed above.

The first CO₂/COS/H₂S acid gas stream is channeled to second phase separator 326 via conduits 328 and heat transfer apparatus 353. Apparatus 353 facilitates cooling the first CO₂/COS/H₂S acid gas stream such that liquid removal by separator 326 is facilitated. The liquids, including entrained rich solvent, are removed to form a solvent stream that is channeled to stripper 312 via pump 357 and conduit 330. Moreover, a second CO₂/COS/H₂S acid gas stream is formed by separator 326 wherein the CO₂/H₂S acid gas-to-solvent ratio in the second CO₂/OS/H₂S acid gas stream is greater than the CO₂/H₂S acid gas-to-solvent ratio in the first CO₂/COS/H₂S acid gas stream. Furthermore, the second CO₂/COSiH₂S acid gas stream includes the fourth CO₂ concentration, the fourth H₂S concentration, and the second concentration of water. The second water concentration in the second CO₂/COS/H₂S acid gas stream is less than the first water concentration in the first CO₂/COS/H₂S acid gas stream.

The second CO₂/COS/H₂S acid gas stream, including little to no solvent, is channeled to SRUs 332 via conduit 334 and blocking valves 336, wherein valves 336 are usually open when subsystem 300 is in service. SRUs 332 facilitate forming SO₂ and elemental S. Specifically, a portion of the H₂S within the second CO₂/COS/H₂S acid gas stream reacts with O₂ to form the SO₂. The SO₂ further reacts with a portion of the remaining H₂S to form the elemental S and H₂O. A portion of the COS within the second CO₂/COS/H₂S acid gas stream reacts with H₂O to form H₂S and CO₂, some of which may be further converted as described above. Unconverted CO₂, COS, SO₂, and N₂ within SRUs 332 form and constitute the SRU tail gas stream, wherein the SRU tail gas stream has a fifth CO₂ concentration, a fifth concentration of COS, and a fifth H₂S concentration. The elemental S formed is removed from each SRU 332 via associated conduit 338.

Valve 341 is usually open; therefore, TGU 340 receives the SRU tail gas stream via conduit 343 and forms H₂S via hydrogenating the unconverted SO₂. The CO₂ portions of the second CO₂/COS/H₂S acid gas stream and the SRU tail gas stream are substantially chemically unchanged, that is, the fourth and fifth CO₂ concentrations, respectively, are substantially similar. Therefore, TGU 340 forms the second integrated gas stream wherein the ratio of CO₂-to-H₂S is substantially greater than the CO₂-to-H₂S ratio in the second CO₂/COS/H₂S acid gas stream.

The second integrated gas stream is channeled to blower 348 via conduits 342 and valve 344. The second integrated gas stream is then channeled to LP compressor 354 via conduits 350 and valve 352. Subsequently, the second integrated gas stream is then channeled to HP compressor 362 via conduits 356 and 360 and valve 358. Then, the second integrated gas stream is channeled to gasification reactor 208 via conduit 224 as at least a portion of the final integrated gas stream. Valves 344, 352, and 358 are usually open when subsystem 300 is in service.

An exemplary method of assembling an acid gas component reduction system includes coupling at least one acid removal system 300 in flow communication with at least one first syngas stream with at least one acid gas component having a first acid gas component concentration. The method also includes coupling at least one integral absorber 402 in flow communication with at least one acid removal system 300. The method further includes configuring at least one integral absorber 402 such that substantially continuous service of at least one integral absorber 402 facilitates producing a second syngas stream having a second acid gas component concentration that is less than the first acid gas component concentration.

Specifically, sulfur reduction subsystem 400 is coupled in flow communication with subsystem 300. Subsystem 400 includes at least one integral absorber 402. Absorber 402 is similar to main absorber 302 in that both absorbers 302 and 402 are configured to use a solvent to separate and remove predetermined components from a fluid stream. Absorber 402 is different from main absorber 302 in that absorber 402 operates at a lower pressure than main absorber 302 and is configured to selectively separate CO₂ from H₂S and COS that are retained in the first integrated gas stream that is received from first phase separator 313. Absorber 402 is also configured to produce a third integrated gas stream (not shown).

Separator 313 is coupled in flow communication with absorber 402 via a plurality of conduits 405 and a blocking valve 407 wherein conduits 405 facilitate channeling the first integrated gas stream from separator 313 to absorber 402.

Subsystem 400 also includes a first lean solvent conduit 409 that is coupled in flow communication to a second lean solvent conduit 411 via a blocking valve 413. Conduit 411 is coupled in flow communication to conduit 343 via blocking valve 415. Conduits 411 and 409 facilitate channeling at least a portion of the cooled lean solvent stream from conduit 343 to absorber 402.

Absorber 402 is coupled in flow communication with stripper 312 via a plurality of conduits 417 and a blocking valve 419 wherein conduits 417 facilitate channeling a third rich solvent stream to stripper 312. Moreover, subsystem 400 further includes a rich solvent storage loop 420. Loop 420 includes at least one rich solvent transfer pump 410 coupled in flow communication to conduit 417. Pump 410 is configured to pump at least a portion of the third rich solvent stream from conduit 417 through a cooler 412 to a rich solvent storage tank 414 via at least one conduit 430 and a blocking valve 431. Loop 420 is coupled in flow communication with stripper 312, wherein a plurality of conduits 432 that include a blocking valve 435 facilitates channeling predetermined portions of rich solvent to stripper 312.

Absorber 402 is also coupled in flow communication with conduit 356 via a plurality of HP compressor bypass conduits 444 and a HP compressor bypass valve 448. Absorber 402 is further coupled in flow communication with conduit 360 via a plurality of CO₂ conduits 446 and a CO₂ valve 424. Conduit 446 is coupled in flow communication with a plurality of discharge-to-flare conduits 450 and a discharge-to-flare valve 452. Conduit 446 is configured to channel the third integrated gas stream produced by absorber 402.

In the exemplary embodiment, valves 407, 413, 415, 419, 431, 435, 448, 424, and 452 are remotely- and automatically-operated valves that are coupled in data communication with a control system (not shown). Alternatively, valves 407, 413, 415, 419, 431, 435, 448, 424, and 452 are any valves operated in any manner that facilitates operation of subsystem 400 as described herein.

In operation, portions of subsystem 400 are in substantially continuous operation, and other portions are in a standby status as discussed further below. Valve 407 is usually open and the first integrated gas stream is substantially continuously channeled from first phase separator 313 to absorber 402 via conduit 405. The first integrated gas stream contacts at least a portion of the lean solvent which removes at least a portion of the selected acid gas components from the first integrated gas stream to produce the third integrated gas stream. In the exemplary embodiment, such acid gas components include, but are not limited to, H₂S and COS. The third integrated gas stream includes a seventh CO₂ concentration, a seventh COS concentration, and a seventh H₂S concentration, wherein the third integrated gas stream has little to no H₂S and COS entrained within. The removed H₂S and COS are retained within the solvent, thereby forming the third rich solvent stream.

Moreover, valve 419 is usually open, and the third rich solvent stream is channeled to stripper 312 from absorber 402 via conduits 417 wherein the rich solvent is regenerated in a manner as described above. Furthermore, valves 415 and 413 are usually open such that cooled lean solvent is substantially continuously channeled from conduit 343 to absorber 402 to replenish rich solvent that is removed from absorber 402. Moreover, valve 424 is usually open such that the third integrated gas stream is substantially continuously channeled from absorber 402 to conduit 360. The third integrated gas stream mixes with one of the integrated gas streams (discussed further below) channeled through conduit 356 and 360 via compressor 354 to form at least a portion of the final integrated gas stream.

Furthermore, valve 431 is usually closed such that substantially all of the third rich solvent stream is channeled to stripper 312. In the event that it is desired to channel a predetermined portion of the third rich solvent stream to storage tank 414, valve 431 is opened and pump 410 is operated. That portion of the stream is channeled through cooler 412 to remove at least a portion of the heat in the portion of the stream being channeled to tank 414. When the predetermined portion of the third rich solvent stream is channeled to tank 414, pump 410 is stopped and valve 431 is closed. Similarly, in the event that it is desired to channel a predetermined portion of rich solvent within tank 414 to stripper 312, valve 435 is opened and the solvent is channeled through conduits 432. Once the desired portion of solvent has been channeled, valve 435 is closed. During operation, as described above, valves 364 and 366 are usually open. However, if a SRU 332 is to be taken out of service, for planned operational reasons or an equipment trip, the affected SRU 332 is taken out of service by closing the associated valves 336. Additional flow through the remaining in-service SRU 332 may decrease the effectiveness of the in-service SRU 332. To facilitate reducing the flow to the in-service SRU 332, valve 419 may be closed, thereby reducing the rich solvent flow to stripper 312 which subsequently reduces the first CO₂/COS/H₂S acid gas stream flow from stripper 312 to the in-service SRU 332 via phase separator 326. Such flow modulation to SRU 332 facilitates operation of the in-service SRU 332 and TGU 340 such that a predetermined effectiveness of the in-service SRU 332 and TGU 340 is substantially attained. Moreover, such method of modulating the first CO₂/CO/H₂S acid gas stream flow from stripper 312 to the in-service SRU 332 facilitates avoidance of emissions release. Furthermore, such method of continuously maintaining absorber 402 in service and modulating the flow of the associated streams facilitates avoidance of undue emissions release during transients since the reduced concentrations of H₂S and COS facilitate increased operational margins to environmental compliance limits of these compounds.

Closing valve 419 and substantially eliminating rich solvent flow into stripper 312 from absorber 402 while maintaining the first integrated gas stream flow rate into absorber 402 via conduit 405 necessitates opening valve 431 and placing pump 410 in service, thereby facilitating continuous operation of absorber 402. The rich solvent produced in absorber 402 is channeled to storage tank 414 for channeling to stripper 312 during periods of lower stripper 312 duty. Valve 435 may be opened to facilitate channeling rich solvent to stripper 312 at a predetermined rate that facilitates operation of stripper 312.

In the event of removing compressor 362 from service, for planned operational reasons or an equipment trip, the stream channeled through compressor 354 may be channeled to absorber 402 via closing valve 358 and valve 424 and opening valve 448 and valve 452, thereby channeling the stream through absorber 402 to flare conduit 446 via conduits 436 and 446. Such method of continuously maintaining absorber 402 in service and channeling the associated stream facilitates avoidance of undue emissions release during transients since the reduced concentrations of H₂S and COS facilitate increased operational margins to environmental compliance limits of these compounds.

Also, if IGCC plant 100 is configured with a plurality of blowers 348, compressors 354 and 362 and associated conduits 350, 356, and 360 as well as valves 344, 352 and 358, one blower 348 and/or one LP compressor 354 may be removed from service, for planned operational reasons or equipment trips, while channeling an increased portion of the associated stream through the remaining components and absorber 402. Such method of channeling the associated streams facilitates flexibility in maintaining a predetermined operational throughput. Moreover, such method of continuously maintaining absorber 402 in service and modulating the flow of the associated streams facilitates avoidance of undue emissions release during transients since the reduced concentrations of H₂S and COS facilitate increased operational margins to environmental compliance limits of these compounds.

Sulfur reduction subsystem 400 facilitates mitigating a concentration of sulfur-containing species such as, but not limited to, H₂S and COS in the raw and clean syngas streams channeled through conduits 220 and 228, respectively, by substantially continuously mitigating the concentration of H₂S and COS in the final integrated gas stream channeled to gasification reactor 208 via conduit 224. Absorber 402 is in service substantially continuously, whereby absorber 402 substantially continuously removes H₂S and COS as described above. Specifically, for example, decreasing the concentration of H₂S and CO2 in the final integrated gas stream channeled to gasification reactor 208 via conduit 224 facilitates converting COS in the cooled raw syngas stream to H₂S and CO₂ via hydrolysis in unit 221. Specifically, increasing the rate of conversion of COS to H₂S and CO₂ is primarily accomplished by shifting the associated chemical reaction via decreasing the concentrations of the associated products.

Such mitigation in these H₂S, COS and CO₂ concentrations facilitates decreasing associated capital construction costs of IGCC 100. For example, decreasing the size of the aforementioned components associated with lean solvent facilitates decreasing the size of main absorber 302 and the flow rate of lean solvent to absorber 302. Moreover, the reduced flow rate of lean solvent to absorber 302 facilitates decreasing the size of heat transfer apparatuses 305 and 341 as well as the size of conduits 349, 333, 335, 337, and 343 and pumps 347, 331, and 339. Furthermore, reducing standard operational costs is facilitated, including, but not limited to, auxiliary electric power usage associated with electric motor-driven regeneration refrigerant compressors and lean solvent inventories. Also, mitigating the concentration of H₂S and COS being channeled through compressor 362 facilitates decreasing the size and auxiliary electric power requirements of compressor 362. Mitigating auxiliary power consumption facilitates increasing an overall efficiency of IGCC plant 100.

Furthermore, HP compressor bypass conduit 436 facilitates continued removal of H₂S and COS during operational transients. Such transients include, but are not limited to, removal of predetermined equipment from service. Such removal may be for planned operational reasons or unplanned equipment trips. Therefore, maintaining H₂S and COS below predetermined concentrations during normal operation via conduit 405 as well as during transient operations via conduit 436 facilitates a transient management scheme. Specifically, maintaining a predetermined margin between H₂S and COS concentrations and environmental release limits facilitates increasing flexibility of operation of IGCC plant 100 while mitigating potentials for environmental releases.

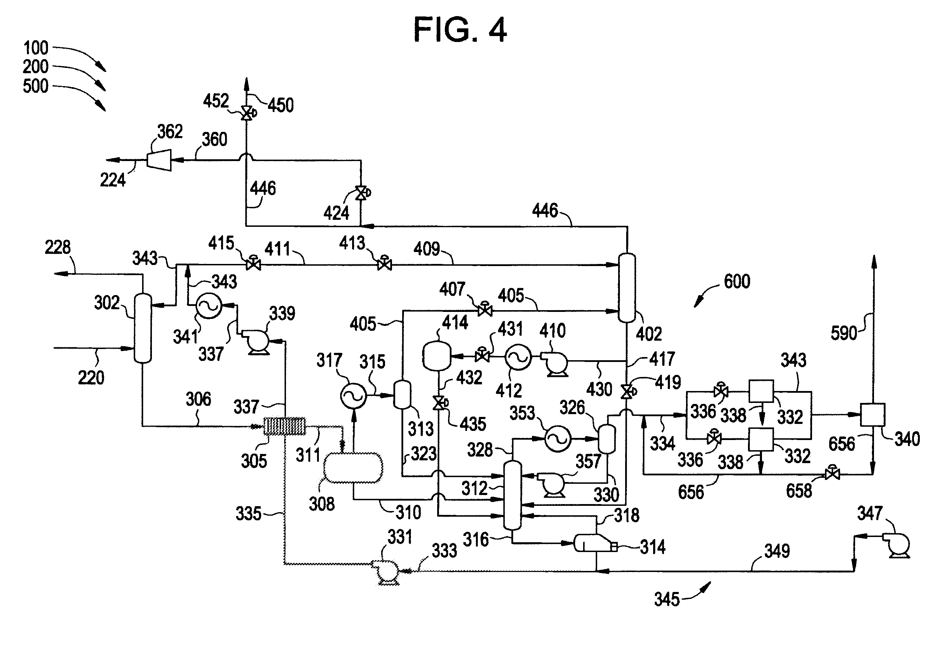

Figure 4 is a schematic diagram of an alternative acid gas removal subsystem 500 and sulfur removal subsystem 600 that can be used with IGCC power generation plant 100. Alternative acid gas removal subsystem 500 is similar to subsystem 300 with some exceptions. Subsystem 500 does not include TGU block valve 341, blower 348 and associated conduits 342 and valve 344, LP compressor 354 and associated conduits 350 and 356, and valves 352 and 358. Moreover, subsystem 500 includes a conduit 590 that couples TGU 340 with a thermal oxidizer (not shown) for removal and chemical conversion of the third integrated gas stream (not shown) channeled from TGU 340. Therefore, in alternative subsystem 500, the third integrated gas stream is not channeled to gasification system 200 as is usually done with subsystem 300.

Also, alternative sulfur removal subsystem 600 is similar to subsystem 400 with some exceptions. Subsystem 600 does not include HP compressor bypass conduit 436 and associated valve 448. Moreover, subsystem 600 includes a SRU recirculation conduit 656 that couples at least a portion of TGU 340 with SRU inlet conduit 334 in flow communication. Conduit 656 is configured to channel at least a portion of the third integrated gas stream formed by TGU 340 to SRUs 332 for additional chemical conversion. A normally open valve 658 is positioned within conduit 656.

Therefore valve 658 and conduit 656 facilitate substantially continuously recirculating at least a portion of the third integrated gas stream formed by TGU 340 to the SRUs 332 for additional chemical conversion. Such recirculation facilitates the effectiveness of SRUs 332. To further facilitate such effectiveness, the flow to SRU 332s may be decreased by closing valve 419, thereby reducing the rich solvent flow to stripper 312 which subsequently reduces the first CO₂/COS/H₂S acid gas stream flow from stripper 312 to SRUs 332 via phase separator 326. Such flow modulation to SRUs 332 facilitates operation of SRU 332s and TGU 340 such that a predetermined effectiveness of SRUs 332 and TGU 340 is substantially attained. Moreover, such method of modulating the first CO₂/COS/H₂S acid gas stream flow from stripper 312 to SRUs 332 facilitates avoidance of emissions release.

Closing valve 419 and substantially eliminating rich solvent flow into stripper 312 from absorber 402 while maintaining the first integrated gas stream flow rate into absorber 402 via conduit 405 necessitates opening valve 431 and placing pump 410 in service, thereby facilitating continuous operation of absorber 402. The rich solvent produced in absorber 402 is channeled to storage tank 414 for channeling to stripper 312 during periods of lower stripper 312 duty. Valve 435 may be opened to facilitate channeling rich solvent to stripper 315 at a predetermined rate that facilitates operation of stripper 312.

The method and apparatus for synthetic gas, or syngas, production as described herein facilitates operation of IGCC power generation plants, and specifically, syngas production systems. Specifically, increasing H₂S and COS removal from syngas production fluid streams increases syngas production efficiency. More specifically, decreasing the concentration of H₂S and COS in a carbon dioxide (CO₂) feed stream to a gasification reactor facilitates decreasing the concentration of impurities within the clean syngas channeled to a gas turbine. Moreover, configuring an integral absorber to remove H₂S and COS on a substantially continuous basis as described herein facilitates optimally operating the syngas production process to facilitate improving IGCC plant production efficiency, thereby facilitating a reduction in operating costs. Furthermore, such method of continuously maintaining the absorber in service and modulating the flow of the associated gas streams facilitates avoidance of undue emissions release since the reduced concentrations of H₂S and COS facilitate increased operational margins to environmental compliance limits of these compounds. Also, the method and equipment for producing such syngas as described herein facilitates reducing capital costs associated with fabricating such IGCC plant.

Exemplary embodiments of syngas production as associated with IGCC plants are described above in detail. The methods, apparatuses, and systems are not limited to the specific embodiments described herein nor to the specific illustrated IGCC plants. Moreover, such methods, apparatuses, and systems are not limited to IGCC plants and may be embedded within facilities that include, but are not limited to, hydrogen production, Fischer-Tropsch fuel production processes, as well as gasification systems and gas cleaning systems generally.

During operation, the fluid flowing through at least one of the multi-train SRUs in the embodiments described above is currently subjected to pressure control whereas the fluid flowing through the remaining SRUs is subjected to flow rate control. When one of the SRUs is taken out of service, for example, when the unit trips or is shut down during maintenance, a significant amount of the stream originally flowing to the out-of-service SRU may be re-routed to the remaining in-service SRUs. As described above, this stream may comprise H₂S, CO₂, and/or COS. However, the additional flow through the in-service SRUs may decrease the effectiveness of the in-service SRUs and lead to the unstable operation of those SRUs such that they trip also. The portion of the H₂S-comprising stream that is not accommodated for by the in-service SRUs may undesirably need to be flared, adversely impacting emissions. As such, a new method has been developed for operating the SRUs when one is taken out of service.

In an exemplary embodiment, this new approach involves using a control system in electrical communication with the SRUs and the valves leading to the SRUs to identify when at least one of the SRUs is taken out of service. This approach can be applied using the systems depicted in Figures 2 and 3 in conjunction a control system configured to perform the following tasks. In response to identifying when at least one of the SRUs is taken out of service, the control system closes the valve disposed upstream from the out-of-service SRU and adjusts a flow path of the portion of the stream originally passing to the out-of-service SRU such that this portion passes to an LP absorber for removing the emission gas via a blower and a compressor. For example, in Figure 2, one of the valves 336 would be closed and at least one valve 454 would be opened to allow the stream to flow through at least one conduit 440 to at least one blower 348 via at least one conduit 346 and then to at least one LP compressor 354 via at least one conduit 350, at which point the stream would be allowed to flow to the LP absorber 402 via at least one conduit 444. In addition, the control system causes the fluid flowing through all of the remaining in-service SRUs to be subjected to flow rate control. As such, the SRU fluid that is subjected to pressure control during normal operation is switched to flow rate control when one of the SRUs is taken out of service. As a result, the flow rate of the effluent gas leaving the in-service SRUs may have some fluctuation. The LP compressor may absorb any flow fluctuations created by one of the SRUs being out of service and thus maintain the gas flowing through the LP compressor at a substantially constant flow rate.

The method described above desirably prevents the remaining SRUs from becoming unstable and tripping, which could result in the emission of undesirable gases to the atmosphere. Moreover, the compressed gas flowing from the LP compressor to the LP absorber is desirably absent of flow fluctuations that could compromise the ability of the emissions-lean solvent to remove H₂S and COS from the compressed gas, thereby forming an emission-rich solvent stream. Since the overhead gas leaving the LP absorber may be passed to a flare, the presence of the LP compressor in the system further reduces the level of undesirable emissions.

In additional embodiments, the method described above may be applied generally to reactor units arranged in parallel for treating a stream comprising an emission gas. As used herein, an "emission gas" is defined as any gas that is subjected to emissions requirements in any state or country, such as a sulfur-comprising gas. Traditionally, when one reactor unit is taken out of service or trips, some gas cannot be processed by the remaining reactor units. This untreated gas is sent to a flare, resulting in undesirable emissions. In contrast, the method described above sends this gas to an LP absorber to remove the undesirable emission gases, thereby reducing the release of undesirable emissions to the atmosphere. The method described above is particularly useful during start-up of the reactor units when the in-service units are less likely to be able to handle the load of an out-of-service unit.

The method described above may be more specifically applied to Sulfur Removal Units, including those belonging to systems other than an IGCC plant such as a sulfuric acid production plant. As used herein, the term "Sulfur Removal Unit" refers to any unit for treating a stream comprising a sulfur-comprising gas. Therefore, while the SRUs described above produce elemental sulfur, the method described above could also be applied to SRUs that convert the H₂S stream to sulfur trioxide (SO₃), which can then be converted to sulfuric acid (H₂SO₄).

As used herein, the terms "a" and "an" do not denote a limitation of quantity but rather denote the presence of at least one of the referenced items. Moreover, ranges directed to the same component or property are inclusive of the endpoints given for those ranges (e.g., "about 5 nanometers (nm) to about 20 nm," is inclusive of the endpoints and all intermediate values of the range of about 5 nm to about 20 nm). Reference throughout the specification to "one embodiment", "another embodiment", "an exemplary embodiment", and so forth means that a particular element (e.g., feature, structure, and/or characteristic) described in connection with the embodiment is included in at least one embodiment described herein, and might or might not be present in other embodiments. In addition, it is to be understood that the described elements may be combined in any suitable manner in the various embodiments. Unless defined otherwise, technical and scientific terms used herein have the same meaning as is commonly understood by one of skill in the art to which this invention belongs.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method for treating a stream comprising an emission gas, comprising:
   passing portions of the stream comprising the emission gas to two or more reactor units arranged in parallel while subjecting fluid flowing through at least one of the reactor units to pressure control;
   identifying when at least one of the reactor units trips or is taken out of service; and
   when at least one of the reactor units trips or is taken out of service, adjusting a flow path of said portion of the stream originally passing to the out-of-service reactor unit such that said portion passes to an absorber for removing the emission gas via a compressor, and subjecting the fluid flowing through all of the in-service reactor units to flow rate control.
2. The method of Clause 1, wherein the emission gas comprises hydrogen sulfide, carbonyl sulfide, or a combination comprising at least one of the foregoing gases, and the reactor units are sulfur removal units.
3. The method of any preceding Clause, wherein said portion of the stream originally passing to the out-of-service reactor unit passes to a blower before passing to the compressor.
4. The method of any preceding Clause, wherein the sulfur removal units are sulfuric acid production units.
5. The method of any preceding Clause, wherein the hydrogen sulfide is combined with oxygen in the sulfur removal units to form sulfur dioxide and elemental sulfur, wherein the stream also comprises carbon dioxide and an effluent gas leaving the sulfur removal units comprises unconverted hydrogen sulfide, carbon dioxide, and sulfur dioxide.
6. The method of any preceding Clause, wherein the carbonyl sulfide is combined with water in the sulfur removal units to form hydrogen sulfide and carbon dioxide, and wherein the effluent gas leaving the sulfur removal units also comprises unconverted carbonyl sulfide.
7. The method of any preceding Clause, wherein a compressed gas stream leaving the compressor is combined with an emissions-lean solvent in the absorber to form an overhead gas stream comprising carbon dioxide and an emissions-rich solvent stream comprising at least one of hydrogen sulfide and carbonyl sulfide.
8. The method of any preceding Clause, further comprising passing the overhead gas stream to at least one of a high pressure compressor and a flare.
9. The method of any preceding Clause, further comprising passing the emissions-rich solvent stream to an acid gas stripper disposed upstream from the sulfur removal units for regeneration.
10. The method of any preceding Clause, wherein a tail gas unit for hydrogenating the unconverted sulfur dioxide to form hydrogen sulfide is disposed downstream from the sulfur removal units and upstream from a blower that is disposed upstream from the compressor, the compressor being disposed upstream from another compressor for increasing the pressure of fluid flowing through the compressor.
11. A system for treating a stream comprising hydrogen sulfide, comprising:
   two or more reactor units arranged in parallel for receiving portions of a stream comprising an emission gas;
   a valve disposed upstream from each of the reactor units for allowing or blocking flow thereto; and
   a control system configured to control the pressure of fluid flowing through at least one of the reactor units when all of the reactor units are in service and to identify when at least one of the reactor units trips or is taken out of service, at which point the control system is configured to i) close the valve disposed upstream from the out-of service reactor unit, ii) re-route said portion of the stream originally passing to the out-of-service reactor unit such that said portion passes to an absorber for removing the emission gas via a compressor, and ii) control the flow rate of the fluid flowing through all of the in-service reactor units.
12. The system of Clause 11, wherein the emission gas comprises hydrogen sulfide, carbonyl sulfide, or a combination comprising at least one of the foregoing gases, and the reactor units are sulfur removal units.
13. The system of Clause 11 or 12, wherein a blower is disposed upstream from the compressor and the absorber.
14. The system of any of Clauses 11 to 13, wherein the sulfur removal units are sulfuric acid production units.
15. The system of any of Clauses 11 to 14, wherein the sulfur removal units are configured to combine oxygen with the hydrogen sulfide to form sulfur dioxide and elemental sulfur.
16. The system of any of Clauses 11 to 15, wherein the stream also comprises carbon dioxide.
17. The system of any of Clauses 11 to 16, further comprising a tail gas unit disposed downstream from the sulfur removal units for receiving effluent gas from the sulfur removal units comprising unconverted hydrogen sulfide, carbon dioxide, and sulfur dioxide, the tail gas unit being configured to hydrogenate the unconverted sulfur dioxide to form hydrogen sulfide.
18. The system of any of Clauses 11 to 17, further comprising a blower disposed downstream from the tail gas unit and upstream from the compressor.
19. The system of any of Clauses 11 to 18, wherein the sulfur removal units are configured to combine water with the carbonyl sulfide to form hydrogen sulfide and carbon dioxide.
20. The system of any of Clauses 11 to 19, wherein the absorber is configured to combine an emissions-lean solvent with a compressed gas stream received from the compressor to form an overhead gas stream comprising carbon dioxide and an emissions-rich solvent stream comprising hydrogen sulfide, carbonyl sulfide, or a combination comprising at least one of the foregoing gases.

## Claims

1. A method for treating a stream comprising an emission gas, comprising:
passing portions of the stream comprising the emission gas to two or more reactor units (332) arranged in parallel while subjecting fluid flowing through at least one of the reactor units to pressure control;
identifying when at least one of the reactor units trips or is taken out of service; and
when at least one of the reactor units trips or is taken out of service, adjusting a flow path of said portion of the stream originally passing to the out-of-service reactor unit such that said portion passes to an absorber (302) for removing the emission gas via a compressor (354), and subjecting the fluid flowing through all of the in-service reactor units to flow rate control.

2. The method of Claim 1, wherein the emission gas comprises hydrogen sulfide, carbonyl sulfide, or a combination comprising at least one of the foregoing gases, and the reactor units are sulfur removal units (332).

3. The method of any preceding Claim, wherein the sulfur removal units (332) are sulfuric acid production units.

4. The method of any preceding Claim, wherein the hydrogen sulfide is combined with oxygen in the sulfur removal units (332) to form sulfur dioxide and elemental sulfur, wherein the stream also comprises carbon dioxide and an effluent gas leaving the sulfur removal units (332) comprises unconverted hydrogen sulfide, carbon dioxide, and sulfur dioxide.

5. The method of any preceding Claim, wherein the carbonyl sulfide is combined with water in the sulfur removal units (332) to form hydrogen sulfide and carbon dioxide, and wherein the effluent gas leaving the sulfur removal units (332) also comprises unconverted carbonyl sulfide.

6. The method of any preceding Claim, wherein a compressed gas stream leaving the compressor is combined with an emissions-lean solvent in the absorber (302) to form an overhead gas stream comprising carbon dioxide and an emissions-rich solvent stream comprising at least one of hydrogen sulfide and carbonyl sulfide.

7. The method of any preceding Claim, further comprising passing the emissions-rich solvent stream to an acid gas stripper (312) disposed upstream from the sulfur removal units (332) for regeneration.

8. The method of any preceding Claim, wherein a tail gas unit (340) for hydrogenating the unconverted sulfur dioxide to form hydrogen sulfide is disposed downstream from the sulfur removal units (332) and upstream from a blower (348) that is disposed upstream from the compressor (354), the compressor (354) being disposed upstream from another compressor (362) for increasing the pressure of fluid flowing through the compressor.

9. A system (300) for treating a stream comprising hydrogen sulfide, comprising:
two or more reactor units (332) arranged in parallel for receiving portions of a stream comprising an emission gas;
a valve (336, 344, 352, 358)disposed upstream from each of the reactor units (332) for allowing or blocking flow thereto; and
a control system configured to control the pressure of fluid flowing through at least one of the reactor units (332) when all of the reactor units (332) are in service and to identify when at least one of the reactor units (332) trips or is taken out of service, at which point the control system is configured to i) close the valve (336, 344, 352, 358) disposed upstream from the out-of-service reactor unit (332), ii) re-route said portion of the stream originally passing to the out-of-service reactor unit (332) such that said portion passes to an absorber (302) for removing the emission gas via a compressor (354), and ii) control the flow rate of the fluid flowing through all of the in-service reactor units (332).

10. The system of Claim 9, wherein the emission gas comprises hydrogen sulfide, carbonyl sulfide, or a combination comprising at least one of the foregoing gases, and the reactor units are sulfur removal units (332).
